(19) Europäisches Patentamt
European Patent Office
Office européen des brevets

(11) **EP 3 256 741 B1**

(12) **FASCICULE DE BREVET EUROPEEN**

(45) Date de publication et mention
de la délivrance du brevet:
**23.01.2019 Bulletin 2019/04**

(21) Numéro de dépôt: **16707883.1**

(22) Date de dépôt: **09.02.2016**

(51) Int Cl.:
*F04D 29/54* *(2006.01)*          *F01D 5/14* *(2006.01)*
*F02K 3/06* *(2006.01)*          *F04D 29/66* *(2006.01)*
*F04D 29/68* *(2006.01)*          *F01D 9/04* *(2006.01)*
*F01D 25/16* *(2006.01)*

(86) Numéro de dépôt international:
**PCT/FR2016/050274**

(87) Numéro de publication internationale:
**WO 2016/128664 (18.08.2016 Gazette 2016/33)**

(54) **ENSEMBLE DE REDRESSEMENT À PERFORMANCES AÉRODYNAMIQUES OPTIMISÉES**

AUSLASSLEITSCHAUFELANORDNUNG MIT VERBESSERTER AERODYNAMIK

OUTLET GUIDE VANE STRUCTURE WITH IMPROVED AERODYNAMICS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.02.2015 FR 1551013**

(43) Date de publication de la demande:
**20.12.2017 Bulletin 2017/51**

(73) Titulaire: **SAFRAN AIRCRAFT ENGINES
75015 Paris (FR)**

(72) Inventeurs:
• **DAMEVIN, Henri-Marie
77550 Moissy-Cramayel Cedex (FR)**

• **FESSOU, Philippe, Jacques, Pierre
77550 Moissy-Cramayel Cedex (FR)**
• **MANIERE, Vianney, Christophe, Marie
77550 Moissy-Cramayel Cedex (FR)**
• **SCHVALLINGER, Michaël, Franck, Antoine
77550 Moissy-Cramayel Cedex (FR)**

(74) Mandataire: **Regimbeau
20, rue de Chazelles
75847 Paris Cedex 17 (FR)**

(56) Documents cités:
**US-A1- 2006 024 158      US-A1- 2011 255 964
US-A1- 2013 259 672**

**Description**

DOMAINE DE L'INVENTION

L'invention concerne un ensemble de redressement de flux d'air de turbomachine comprenant des aubes de redresseur et un ou plusieurs bras structuraux. L'invention s'applique en particulier aux turbomachines à double-flux.

ETAT DE LA TECHNIQUE

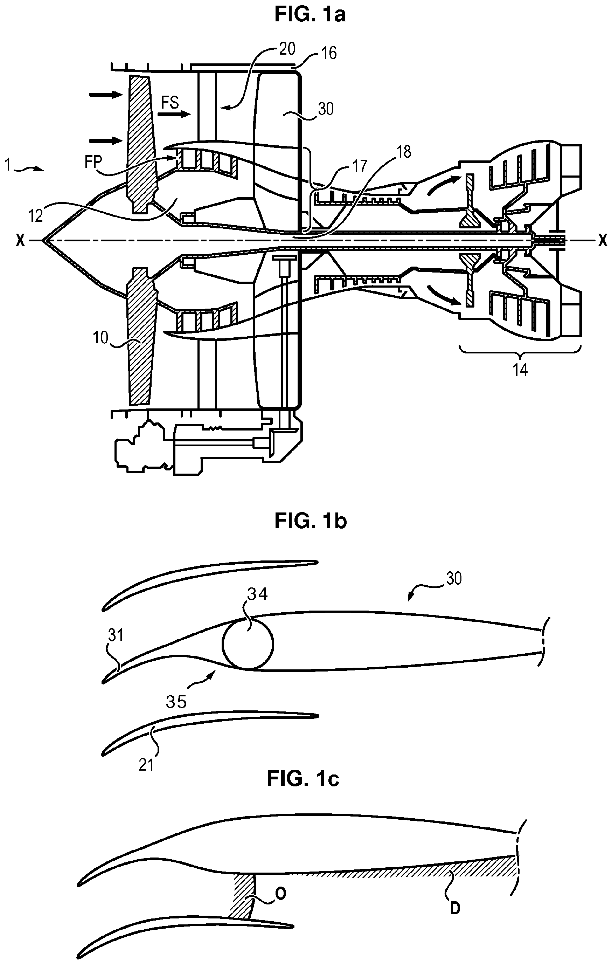

Une turbomachine à double flux pour la propulsion aéronautique est représentée en figure 1a. Elle comprend une soufflante 10 délivrant un flux d'air dont une partie centrale, appelée flux primaire $F_P$, est injectée dans un compresseur 12 qui alimente une turbine 14 entraînant la soufflante.

La partie périphérique, appelée flux secondaire $F_S$, du flux d'air est quant à elle éjectée vers l'atmosphère pour fournir la majeure partie de la poussée de la turbomachine 1, après avoir franchi une couronne 20 d'aubes 21 fixes disposée en aval de la soufflante. Cette couronne, appelée redresseur 20 (également connue sous l'acronyme anglais OGV pour « Outlet Guide Vane »), permet de redresser le flux d'air secondaire en sortie de la soufflante, tout en limitant les pertes au maximum.

Sur la même figure est représenté un bras structural 30, qui relie la virole 16 du carter intermédiaire au moyeu 17 du carter intermédiaire, en contribuant ainsi à supporter et à maintenir en positions le(s) arbre(s) moteur 18 et assurer la tenue structurale de l'ensemble. Le bras structural a aussi pour fonction de permettre la transmission de mouvement ou de fluides entre la turbomachine et le reste de l'aéronef sur lequel elle est montée. Pour ce faire, le bras structural est creux, et permet de loger des canalisations, arbres de transmission, etc.

Plusieurs types de bras structuraux existent, en fonction de leur rôle et de leur position dans la turbomachine.

Par exemple des bras structuraux dits « principaux », dont la fonction principale est de soutenir la turbomachine sous l'aile de l'avion, sont disposés à « 6h » et à « 12h », c'est-à-dire verticalement par rapport à l'avion disposé sur un sol horizontal (terminologie comparée avec la position des aiguilles d'une montre).

Des bras structuraux dits « auxiliaires » n'ont pas pour fonction principale de soutenir la turbomachine mais de réaliser une transmission de puissance, en étant creux pour contenir un arbre de transmission. Ces bras sont positionnés par exemple à « 8h », c'est-à-dire oblique par rapport à la verticale.

Tous les types de bras structuraux sont également mis à profit pour faire transiter des servitudes de la turbomachine au reste de l'avion, c'est-à-dire par exemple des canalisations d'huile, de carburant, etc.

Dans le but de réduire la masse d'une turbomachine et d'améliorer ses performances, il a été proposé de regrouper des fonctions de redresseur secondaire et de bras structural en une seule et même pièce, et ceci pour tous les types de bras structuraux.

Comme représenté en figure 1b, il a été proposé des aubes de redresseur dites « intégrées », formées par un bras structural, en l'occurrence de type auxiliaire décrit ci-avant, dont une partie amont est carénée pour présenter un profil aérodynamique d'aube de redresseur.

Un tel bras structural présente donc des parties contraintes géométriquement qui sont :

- Une partie d'extrémité amont 31, dont la géométrie doit être celle d'une aube de redresseur, et
- Une zone creuse 34 de transmission de servitudes, dans laquelle sont disposées canalisations, arbres de transmission, etc. Cette zone prend en compte un nombre important de contraintes de type encombrement des servitudes, jeux de fonctionnement et de montage, épaisseurs de matière, etc., elle est dite interdite de dessin (ou selon la terminologie anglaise : « keep-out zone »), c'est-à-dire qu'elle doit être maintenue inchangée en cas de changement de géométrie du bras structural.

Le respect de ces contraintes conduit à créer, pour le bras structural, une géométrie obstruant significativement les veines d'écoulement d'air constituées par les aubes de redresseur situées de part et d'autre du bras.

En particulier, la présence de la zone interdite en aval de la partie carénée du bras forme un épaulement 35 du coté intrados du bras qui obstrue la veine d'écoulement d'air située entre l'intrados du bras et l'aube 21.

Comme visible sur la figure 1c, l'écoulement d'air dans cette veine accélère alors fortement, jusqu'à atteindre au niveau du col une vitesse supersonique. La transition brusque entre une veine subsonique et une poche d'air supersonique peut générer une onde de choc O induisant d'importantes pertes de charges.

En outre, on peut également observer dans cette géométrie un décollement D de la couche limite du flux d'air en aval du col, qui produit également des pertes de charge et donc des pertes de performances pour le redresseur.

Il existe donc un besoin de remédier aux problématiques posées par cette géométrie.

Des autres ensembles de redressement de flux d'air de turbomachine comprenant des aubes de redresseur et un ou plusieurs bras structuraux sont connus des documents US2006/024158 A1, US2011/255964 A1 et US2013/259672.

PRESENTATION DE L'INVENTION

L'invention a pour but de pallier aux inconvénients de l'art antérieur, en proposant un ensemble de redressement de flux d'air présentant des performances aérodynamiques améliorées par rapport à l'art antérieur.

Un but de l'invention est de proposer un ensemble de redressement de flux d'air dont la géométrie supprime les risques d'onde de choc et de décollement de la couche limite du flux d'air.

A cet égard, l'invention a pour objet un ensemble de redressement de flux d'air de turbomachine comprenant :

- un bras structural, et
- au moins une aube de redresseur, située à l'intrados du bras structural et comprenant un bord d'attaque, un bord de fuite, et une ligne de cambrure s'étendant entre le bord d'attaque et le bord de fuite,

dans lequel l'aube et le bras s'étendent radialement autour d'un axe de la turbomachine et définissent entre eux un canal d'écoulement d'air,
et le bras structural comprend :

- une extrémité amont, par rapport à la direction d'écoulement de l'air dans le canal, présentant un profil d'aube de redresseur, et comprenant un bord d'attaque aligné avec le bord d'attaque de l'aube, et
- un épaulement situé à l'intrados du bras, définissant dans le canal un col en amont duquel le canal est convergent et en aval duquel il est divergent, l'aire de la section du canal au niveau du col étant comprise entre 0.7 et 0.9 fois l'aire de la section du canal au niveau des bords d'attaque de l'aube et du bras.
- Avantageusement, mais facultativement, l'ensemble de redressement selon l'invention comprend en outre au moins l'une des caractéristiques suivantes : l'aire de la section du canal au niveau du col est comprise entre 0.75 et 0.85 fois l'aire de la section du canal au niveau des bords d'attaque de l'aube et du bras.
- l'aire de la section du canal au niveau du col est comprise entre 0.79 et 0.81 fois l'aire de la section du canal au niveau des bords d'attaque de l'aube et du bras.
- le col du canal présente une position axiale $x_{col}$ définie par :

$$x_{col} = x_{1/2emax} \pm 0.05c$$

où $x_{1/2emax}$ est la position axiale de la section d'épaisseur maximale du bras du côté de l'intrados et c est la longueur de la corde axiale de l'aube de redresseur,
et la position axiale de la section d'épaisseur maximale du bras du côté de l'intrados est comprise entre la position axiale du bord d'attaque et celle du bord de fuite de l'aube.

L'invention a également pour objet une turbomachine à double-flux, comprenant un redresseur de flux secondaire comportant une pluralité d'aubes disposées radialement autour d'un axe de la turbomachine, et au moins un bras structural, le au moins un bras structural et une aube du redresseur forment un ensemble de redressement selon la description qui précède.

L'ensemble de redressement de flux d'air proposé présente des performances aérodynamiques améliorées.

Le ratio proposé, entre la section de la veine d'air entre le bras structural et l'aube de redresseur au niveau du col et celle au niveau des bords d'attaques du bras et de l'aube impose pour l'aube une ligne de cambrure optimale.

En effet, pour un ratio plus grand, l'aube de redresseur est trop cambrée. Il en résulte, une veine de section importante au niveau du col et après lui, ce qui provoque, comme décrit ci-avant, une accélération du flux d'air lors du franchissement du col, avec potentiellement une onde de choc et un décollement de la couche limite du flux d'air en aval du col.

Pour un ratio inférieur, l'aube de redresseur est moins cambrée. Il en résulte une section de la veine au niveau du col plus réduite, avec un débit d'air plus faible. Bien que cela empêche la formation d'une onde de choc, la réduction du débit d'air dans cette veine induit une redistribution du débit total de l'air du flux secondaire dans le redresseur, ce qui engendre des distorsions de pression statique remontant en amont du redresseur pouvant nuire aux performances aérodynamiques et aéro-acoustiques de la soufflante.

Ainsi le ratio déterminé est-il optimisé pour éviter le phénomène d'onde de choc et de décollement de la couche limite, et pour minimiser la réduction du débit dans la veine entre le bras et l'aube de redresseur.

DESCRIPTION DES DESSINS

D'autres caractéristiques, buts et avantages de l'invention ressortiront de la description qui suit, qui est purement illustrative et non limitative, et qui doit être lue en regard des dessins annexés sur lesquels :

- la figure 1a, déjà décrite, représente schématiquement une turbomachine à double-flux.
- La figure 1b, déjà décrite, représente une vue schématique développée d'un ensemble comprenant un bras structural entre deux aubes de redresseur de flux secondaire,
- La figure 1c, déjà décrite, représente les effets aérodynamiques d'une aube de redresseur côté intrados du bras structural trop cambrée,
- La figure 2a représente un ensemble de redressement de flux d'air conforme à un mode de réalisation de l'invention.
- La figure 2b illustre schématiquement une turbomachine conforme à un mode de réalisation de l'invention.

DESCRIPTION DETAILLEE D'AU MOINS UN MODE DE REALISATION DE L'INVENTION

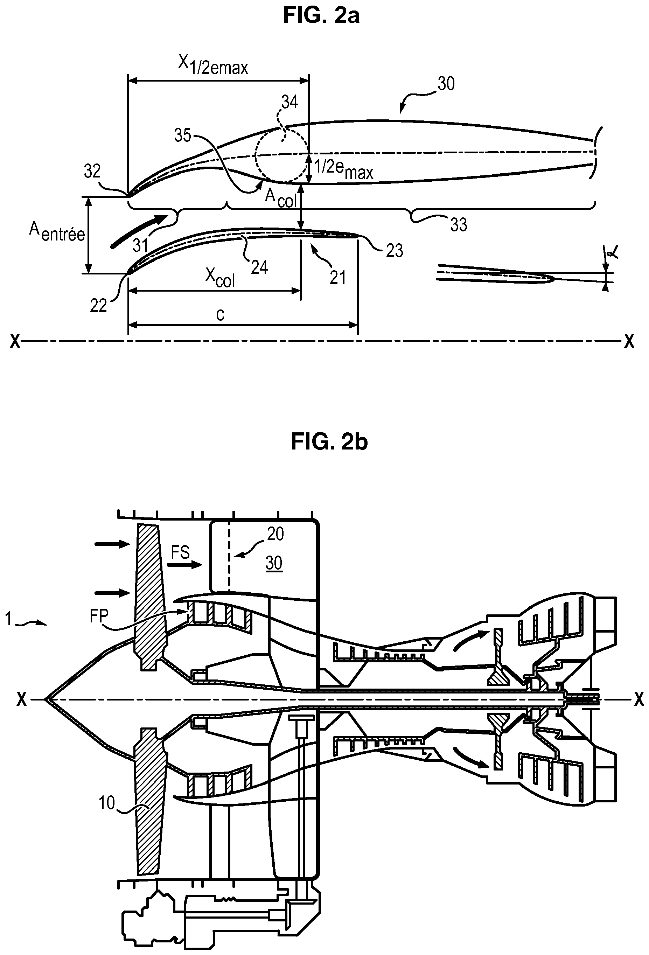

En référence à la figure 2b, on a représenté une turbomachine 1 à double flux comprenant, comme décrit précédemment, une soufflante 10 et un redresseur 20 de type OGV, pour redresser un flux secondaire FR provenant de la soufflante 10.

Le redresseur comprend une pluralité d'aubes 21 réparties régulièrement autour d'un anneau (non représenté) centré sur un axe X-X de la turbomachine, correspondant à l'axe de l'arbre moteur.

En outre la turbomachine 1 comprend au moins un bras structural 30 décrit plus en détails ci-après.

Chaque ensemble comprenant un bras structural 30 et l'aube 21 du redresseur 20 adjacente audit bras sur son côté intrados est appelé ensemble de redressement de flux d'air, et est représenté plus en détails en figure 2a.

L'aube 21 et le bras structural 30 s'étendent radialement autour de l'axe X-X de la turbomachine, la figure 2a étant une vue en développé du secteur d'angle autour de l'axe X-X couvert par l'aube 21 et le bras 30. L'aube 21 et le bras structural 30 définissent entre eux un canal d'écoulement de l'air du flux secondaire.

L'aube 21 comprend classiquement un bord d'attaque 22, un bord de fuite 23, et une ligne de cambrure 24 s'étendant du bord d'attaque au bord de fuite, la ligne de cambrure étant la ligne à mi-distance entre la surface intrados et la surface extrados de l'aube.

On note également $\alpha$ l'angle de cambrure, défini, en chaque point de la ligne de cambrure, par l'angle formé entre la tangente à la ligne de cambrure en ce point et l'axe X-X de la turbomachine.

L'aube 21 est de préférence conformée de manière à présenter un angle $\alpha$ non nul au niveau de son bord d'attaque.

Le bras structural 30 est du type « aube de redresseur intégrée », c'est-à-dire qu'il comprend une partie d'extrémité amont 31 présentant le profil d'une aube de redresseur.

En particulier, la partie d'extrémité amont 31 présente un bord d'attaque 32 aligné avec celui des aubes 21 du redresseur 20, c'est-à-dire au même niveau par rapport à l'axe X-X, et présente, au moins au niveau de son bord d'attaque, la même épaisseur et le même angle de cambrure qu'une aube 21 du redresseur 20.

Le bras structural 30 comporte en outre une partie aval 33, solidaire de la partie d'extrémité amont 31 et directement adjacente à celle-ci.

Le bras structural 30 est avantageusement du type auxiliaire, c'est-à-dire que sa fonction principale est celle de transmission de puissance de la turbomachine vers le reste de l'avion.

A cet égard, pour supporter les efforts engendrés par cette transmission de puissance, les parois de la partie aval 33 adjacente à la partie 31 sont avantageusement réalisées en fonderie. De plus, la partie aval 33 comporte une zone creuse 34 dite interdite de dessin dédiée à l'implantation des servitudes, et notamment un ou plusieurs arbres de transmissions, et le cas échéant canalisations, connexions, etc.

Ainsi la partie amont 31 du bras structural forme l'une des aubes 21 du redresseur 20 de la turbomachine. Si la turbomachine comprend plusieurs bras structuraux 30 identiques répartis autour de l'axe X-X, elle comprend avantageusement autant d'ensembles de redressement comme celui de la figure 2a, comprenant chacun un bras structural et l'aube de redresseur adjacente à celui-ci, sur son côté intrados.

De retour à la figure 2a, la jonction entre la partie d'extrémité amont 31 profilée et la zone creuse 34 forme, sur le côté intrados du bras structural 30, un épaulement 35, qui réduit la section du canal s'étendant entre le bras 30 et l'aube 21. La section considérée est une section en développé du secteur d'angle autour de l'axe X-X couvert par l'aube 21 et le bras 30, c'est-à-dire une zone en deux dimensions définie par l'intersection entre le canal s'étendant entre l'aube 21 et le bras 30 et un cylindre d'axe X-X de rayon égal compris entre le rayon du pied d'aube et le rayon de tête d'aube, de préférence compris entre 5 et 95% de la hauteur radiale de l'aube et du bras, laquelle intersection est ensuite développée.

On note $x_{1/2emax}$ la position axiale de la section du bras 30, transversale à l'axe X-X, présentant une épaisseur maximale du côté intrados du bras, cette épaisseur étant mesurée entre la ligne de cambrure et la surface côté intrados. Cette section du bras d'épaisseur maximale résultant de l'épaulement 35 et de la zone creuse 34, elle se trouve à une position axiale comprise entre les positions axiales du bord d'attaque 22 et du bord de fuite 23 de l'aube 21.

On note mathématiquement, si l'origine de l'axe par rapport auquel est mesurée la position axiale $x_{1/2emax}$ est ramenée au bord d'attaque de l'aube :

$$0.0 < x_{1/2emax} \leq 1.0c$$

Où c est la corde axiale de l'aube c'est-à-dire la distance, mesurée dans la direction de l'axe X-X entre le bord d'attaque et le bord de fuite de l'aube.

Cette géométrie du bras 30 définit dans le canal s'étendant entre le bras 30 et l'aube 21 un col, c'est-à-dire une zone de section minimale du canal, en amont duquel canal est convergent - de section décroissante de l'amont vers l'aval par rapport à la direction du flux d'air - et en aval duquel le canal est divergent - de section croissante de l'amont vers l'aval.

On note $x_{col}$ la position axiale du col du canal, $A_{col}$ l'aire de la section du canal au niveau du col et $A_{entrée}$ l'aire la section d'entrée, située au niveau des bords d'attaques 22 et 32.

L'aire d'une section du canal est calculée comme l'intégrale, sur la hauteur du canal mesurée dans la direction radiale autour de l'axe X-X, de la distance s'étendant entre l'intrados du bras et l'extrados de l'aube à la section considérée.

Les inventeurs ont déterminé que les performances aérodynamiques de l'ensemble de redressement de flux d'air dépendent du degré de rétrécissement du canal entre la section d'entréeet la section du col.

Plus précisément, pour éviter un phénomène d'onde de choc et de décollement de la couche limite, le ratio entre l'aire $A_{col}$ de la section du canal au niveau du col et l'aire $A_{entrée}$ de la section du canal en entrée doit être inférieur à 0,9.

Par ailleurs, pour éviter des distorsions de pression statique dans le redresseur 20 liées à un débit trop faible dans le canal situé entre le bras 30 et l'aube 21, ce même ratio doit être supérieur à 0,7.

On note ainsi :

$$0.7 \le \frac{A_{col}}{A_{entrée}} \le 0.9$$

De préférence, on a

$$0.75 \le \frac{A_{col}}{A_{entrée}} \le 0.85$$

De manière encore plus avantageuse on a :

$$0.79 \le \frac{A_{col}}{A_{entrée}} \le 0.81$$

En effet, les inventeurs ont constaté qu'une valeur optimale de ce ratio peut être 0.8 pour certains moteurs.

De plus la position du col doit être proche de la position axiale de la section d'épaisseur maximale du côté intrados du bras 30, et plus spécifiquement :

$$x_{col} = x_{1/2emax} \pm 0.05c$$

La position du col et l'aire de la section du canal au col permettent, à géométrie fixée du bras de redressement 30, de déterminer la ligne de cambrure de l'aube 21 et donc de déterminer également la géométrie de l'aube.

Ainsi on a proposé un paramétrage d'un ensemble de redressement permettant d'optimiser les performances aérodynamiques de cet ensemble.

**Revendications**

**1.** Ensemble de redressement de flux d'air de turbomachine comprenant :

- un bras structural (30) et
- au moins une aube (21) de redresseur, située à l'intrados du bras structural (30) et comprenant un bord d'attaque (22), un bord de fuite (23), et une ligne de cambrure (24) s'étendant entre le bord d'attaque et le bord de fuite,

dans lequel l'aube et le bras s'étendent radialement autour d'un axe (X-X) de la turbomachine et définissent entre eux un canal d'écoulement d'air,
et le bras structural (30) comprend :

- une extrémité amont (31), par rapport à la direction d'écoulement de l'air dans le canal, présentant un profil d'aube (21) de redresseur, et comprenant un bord d'attaque (32) aligné avec le bord d'attaque (22) de l'aube, et
- un épaulement (35) situé à l'intrados du bras (30), définissant dans le canal un col en amont duquel le canal est convergent et en aval duquel il est divergent,

l'aire ($A_{col}$) de la section du canal au niveau du col étant comprise entre 0.7 et 0.9 fois l'aire ($A_{entrée}$) de la section du canal au niveau des bords d'attaque (22,32) de l'aube (20) et du bras (30).

**2.** Ensemble de redressement de flux d'air de turbomachine selon la revendication 1, dans lequel l'aire ($A_{col}$) de la section du canal au niveau du col est comprise entre 0.75 et 0.85 fois l'aire ($A_{entrée}$) de la section du canal au niveau des bords d'attaque (22,32) de l'aube (20) et du bras (30).

**3.** Ensemble de redressement de flux d'air de turbomachine selon la revendication 2, dans lequel l'aire ($A_{col}$) de la section du canal au niveau du col est comprise entre 0.79 et 0.81 fois l'aire ($A_{entrée}$) de la section du canal au niveau des bords d'attaque (22,32) de l'aube (20) et du bras (30).

**4.** Ensemble de redressement de flux d'air de turbomachine selon l'une des revendications précédentes, dans lequel le col du canal présente une position axiale $x_{col}$ définie par :

$$x_{col} = x_{1/2emax} \pm 0.05c$$

où $x_{1/2emax}$ est la position axiale de la section d'épaisseur maximale du bras du côté de l'intrados et c est la longueur de la corde axiale de l'aube de redresseur,
et la position axiale de la section d'épaisseur maximale du bras du côté de l'intrados est comprise entre la position axiale du bord d'attaque et celle du bord de fuite de l'aube.

5. Turbomachine à double-flux (1), comprenant un redresseur (20) de flux secondaire comportant une pluralité d'aubes (21) disposées radialement autour d'un axe (X-X) de la turbomachine, et au moins un bras structural (30), le au moins un bras structural (30) et une aube du redresseur (21) forment un ensemble de redressement selon l'une des revendications qui précèdent.

## Patentansprüche

1. Auslassleitschaufelanordnung eines Luftstroms einer Turbomaschine, umfassend:

   - einen Strukturarm (30) und
   - mindestens eine Leitschaufel (21), die sich an der Laibung des Strukturarms (30) befindet und eine Anströmkante (22), eine Austrittskante (23) und eine Wölbungslinie (24) umfasst, die sich zwischen der Anströmkante und der Austrittskante erstreckt,

   wobei sich die Schaufel und der Arm radial um eine Achse (X-X) der Turbomaschine erstrecken und zwischen sich einen Luftströmungskanal definieren, und der Strukturarm (30) umfasst:

   - ein in Bezug auf die Strömungsrichtung der Luft in dem Kanal stromaufwärtiges Ende (31), aufweisend ein Profil einer Leitschaufel (21), und umfassend eine Anströmkante (32), die mit der Anströmkante (22) der Schaufel fluchtet, und
   - einen Absatz (35), der sich an der Laibung des Arms (30) befindet, der in dem Kanal einen Kragen definiert, ab dem der Kanal stromaufwärts konvergent ist und ab dem er stromabwärts divergent ist,

   wobei die Fläche (A$_{Kragen}$) des Querschnitts des Kanals im Bereich des Kanals zwischen 0,7 und 0,9 Mal der Fläche (A$_{Einlass}$) des Querschnitts des Kanals im Bereich der Anströmkanten (22, 32) der Schaufel (20) und des Arms (30) liegt.

2. Auslassleitschaufelanordnung eines Luftstroms einer Turbomaschine nach Anspruch 1, wobei die Fläche (A$_{Kragen}$) des Querschnitts des Kanals im Bereich des Kanals zwischen 0,75 und 0,85 Mal der Fläche (A$_{Einlass}$) des Querschnitts des Kanals im Bereich der Anströmkanten (22, 32) der Schaufel (20) und des Arms (30) liegt.

3. Auslassleitschaufelanordnung eines Luftstroms einer Turbomaschine nach Anspruch 2, wobei die Fläche (A$_{Kragen}$) des Querschnitts des Kanals im Bereich des Kanals zwischen 0,79 und 0,81 Mal der Fläche (A$_{Einlass}$) des Querschnitts des Kanals im Bereich der Anströmkanten (22, 32) der Schaufel (20) und des Arms (30) liegt.

4. Auslassleitschaufelanordnung eines Luftstroms einer Turbomaschine nach einem der vorangehenden Ansprüche, wobei der Kragen des Kanals eine axiale Position X$_{Kragen}$ aufweist, die definiert ist durch:

$$x_{Kragen} = x_{1/2maxS} \pm 0.05c$$

   wobei $x_{1/2maxS}$ die axiale Position des Querschnitts maximaler Stärke des Arms auf der Seite der Laibung ist und c die Länge der axialen Sehne der Leitschaufel ist, und die axiale Position des Querschnitts maximaler Stärke des Arms auf der Seite der Laibung zwischen der axialen Position der Anströmkante und der der Austrittskante der Schaufel liegt.

5. Doppelstrom-Turbomaschine (1), umfassend einen sekundären Strömungsgleichrichter (20), aufweisend eine Vielzahl von Schaufeln (21), die radial um eine Achse (X-X) der Turbomaschine angeordnet sind, und mindestens einen Strukturarm (30), wobei der mindestens eine Strukturarm (30) und eine Leitschaufel (21) eine Auslassleitschaufelanordnung nach einem der vorangehenden Ansprüche bilden.

## Claims

1. A turbine engine air flow guide assembly comprising:

   - a structural arm (30) and
   - at least one guide vane (21), located at the lower surface of the structural arm (30) and comprising a leading edge (22), a trailing edge (23) and a camber line (24) extending between the leading edge and the trailing edge,

   wherein the vane and the arm extend radially about an axis (X-X) of the turbine engine and define an air flow channel therebetween, and the structural arm (30) comprises:

   - an upstream end (31), with respect to the air flow direction in the channel, having a guide vane (21) profile and comprising a leading edge (32) aligned with the leading edge (22) of the vane, and
   - a shoulder (35) located at the lower surface of the arm (30), defining a throat in the channel upstream of which the channel is convergent and downstream of which it is divergent,

the area ($A_{throat}$) of the section of the channel at the throat being comprised between 0.7 and 0.9 times the area ($A_{inlet}$) of the section of the channel at the leading edges (22, 32) of the vane (20) and of the arm (30) .

2. The turbine engine air flow guide assembly according to claim 1, wherein the area ($A_{throat}$) of the section of the channel at the throat is comprised between 0.75 and 0.85 times the area ($A_{inlet}$) of the section of the channel at the leading edges (22, 32) of the vane (20) and of the arm (30).

3. The turbine engine air flow guide assembly according to claim 2, wherein the area ($A_{throat}$) of the section of the channel at the throat is comprised between 0.79 and 0.81 times the area ($A_{inlet}$) of the section of the channel at the leading edges (22, 32) of the vane (20) and of the arm (30).

4. The turbine engine air flow guide assembly according to any of the preceding claims, wherein the throat of the channel has an axial position $x_{throat}$ defined by:

$$x_{throat} = x_{1/2maxt} \pm 0.05c$$

where $x_{1/2maxt}$ is the axial position of the maximum thickness section of the arm on the lower surface side and c is the length of the axial chord of the guide vane,
and the axial position of the maximum thickness section of the arm on the lower surface side is comprised between the axial position of the leading edge and that of the trailing edge of the vane.

5. A bypass type turbine engine (1), comprising a secondary flow guide (20) including a plurality of vanes (21) arranged radially about an axis (X-X) of the turbine engine, and at least one structural arm (30), the at least one structural arm (30) and a guide vane (21) forming a guide assembly according to any of the preceding claims.

## FIG. 1a

## FIG. 1b

## FIG. 1c

## FIG. 2a

## FIG. 2b

**EP 3 256 741 B1**

## RÉFÉRENCES CITÉES DANS LA DESCRIPTION

**Documents brevets cités dans la description**

- US 2006024158 A1
- US 2011255964 A1
- US 2013259672 A